# EUROPEAN PATENT SPECIFICATION

(11) **EP 1 621 908 B1**
(45) Date of publication and mention of the grant of the patent: **11.06.2008**
(21) Application number: 05106800.5
(22) Date of filing: 25.07.2005
(51) Int. Cl.: G02B 6/44, H04Q 1/14

(54) **Optical cable distribution cabinet**
Optischer Kabelverteilerschrank
Boitier de distribution de câbles optiques

(30) Priority: 27.07.2004 IT MI20041519
(43) Date of publication of application: 01.02.2006
(73) Proprietor: SIRTI - Società per Azioni, 20127 Milano (IT)
(72) Inventor: Cottino, Edoardo, 20050, ZOCCORINO (Milan) (IT); Leo, Angelo, 10147, TORINO (IT); Dri, Luca, 20060, CASSINA DE' PECCHI (Milan) (IT)
(74) Representative: De Gregori, Antonella

(56) References cited:
- US-A1- 2003 223 724
- US-B1- 6 240 373
- US-B1- 6 424 781

## Description

The present invention refers to an optical permutation device. In particular, the present invention refers to a passive optical permutation device, in which a plurality of entering optical fibres are connected with a plurality of exiting optical fibres.

An optical supply unit comprises a plurality of optical apparatuses, each having preferably a plurality of incoming and exiting optical signals. In order to connect said apparatuses with each other in the unit, optical permutation devices are used which allow, by means of a plurality of connectors, to connect with each other the different signals coming from the various apparatuses.

In particular, said permutation devices are placed inside the box having a side devoted to connection, which side receives the optical fibres entering and exiting from the optical apparatuses to be connected with each other, and a side devoted to permutations, in which the fibres coming from the various apparatuses are connected with each other, according to a predetermined scheme, by means of optical fibre segments of predetermined length (U-bolts).

Obviously, the two sides must be separated from each other to avoid confusion among the fibres that come from the various apparatuses, which fibres are all positioned on one side of the box, and the segments of fibres used for making connections, all positioned on the other side of the box.

The applicant observed that such a compartmental displacement of the optical fibres of an optical permuter involves that the operator effecting the setting-up of the permuter and of the required connections, can operate on both sides of the box.

Usually, the side on which the connection is operated is the rear side of the box, since said connections are generally operated only once, that is when the permuter is settled. The front side of the box usually presents the connectors and the segments of fibres suitable for effecting permutations among the fibres of the number of apparatuses.

It is applicant's aim to simplify either the permutation operations or the setting-up operations of an optical permutation device.

The applicant has realized an optical permutation device having a box structure, in which it is possible to make connection and permutation connections on optical fibres arriving at said permutation device operating on the same side of the box, even though the connection side and the permutation side of the box are physically separated.

This is obtained through the realization of a rotatable separating rack positioned within the box, wherein on one side are displaced connectors for connection and on the other side are displaced permutation connectors.

This design is also disclosed in US 2003/0223724 and US 6 424 781.

The operator can carry out connections on the connection side making the rack rotate towards an "opening" direction, in a way to have the connectors of the connection side in a substantially front position.

Subsequently, making the rack rotate towards a "closing" direction, the side of the rack presenting connectors and segments of fibres that accomplish the permutations, are now in front of the operator.

The present invention is defined in claim 1.

The characteristics and advantages of the permutation device of the present invention will appear much clearer and evident from the following illustrative and non-limiting description referring to the schematic drawings, in which:

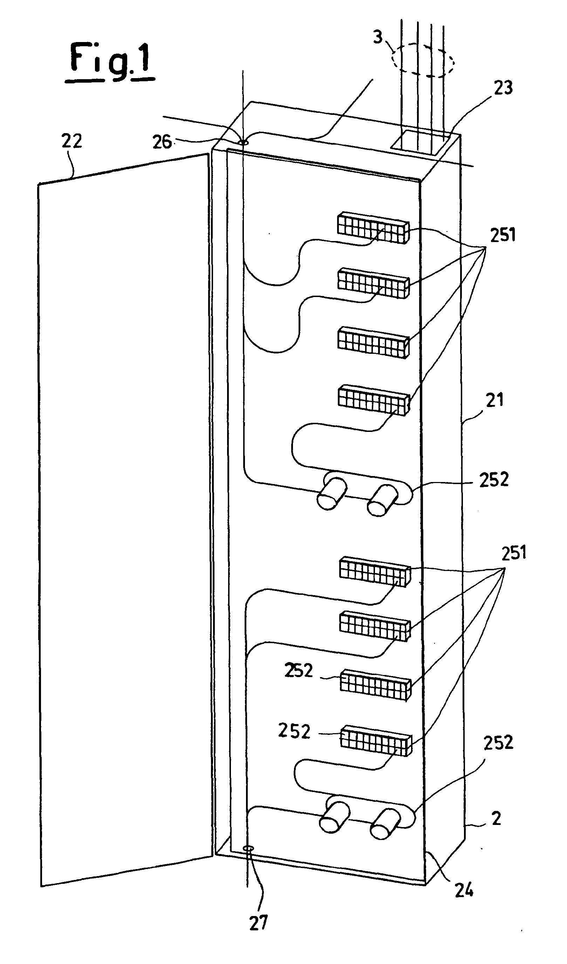

Figure 1 is a schematic perspective view of the permutation device according to a first embodiment of the invention in which is evidenced a permutation side according to the present invention;
Figure 2 is a schematic perspective view of the permutation device according to a second embodiment of the invention in which is evidenced a connection side according to the present invention.

With reference to the above figures, the optical permutation device according to the present invention comprises a box structure 2 in which a plurality of cables and optical fibres 3 are inserted.

The box structure is preferably placed in optical units comprising a plurality of optical apparatuses having respectively incoming and exiting optical fibres and it is used to connect said apparatuses with each other according to a predetermined scheme.

The box structure is substantially provided with a box element 21 closable by means of a rotatable shutter 22. On said box element, preferably on top of it, an opening 23 is provided to allow the entrance and exit of the optical fibre cables of said optical apparatuses.

According to the present invention, said box structure comprises a rotatable rack 24, in-between the box element 23 and the rotatable closing shutter, which substantially turns around the same rotation axis of the rotatable shutter 22, which sizes allow it to be inserted within said box element.

Said rack shows a first side, the so called "connection side" preferably facing the box element, in which are connected the entering and exiting optical fibres of said optical apparatuses coming from the opening 23 and a second side, the so called "permutation side", preferably facing the outer box structure.

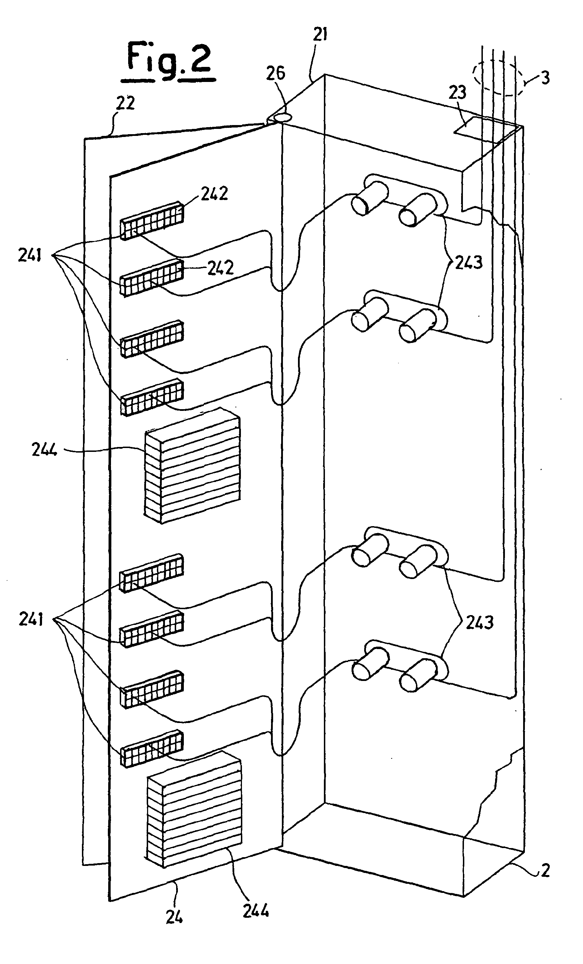

In figure 2, the rack on said connection side comprises a plurality of connection matrices 241, each provided with a plurality of clamps 242, each able to receive at least one optical connector.

Within the scope of the present invention, the rack can also have only one matrix or a number of matrices higher than that shown in the illustrative figure. In the same way, the number of clamps for each matrix can vary from a minimum of a single clamp to a maximum of a predetermined number of clamps for each row of the matrix.

Moreover, the connection side comprises at least a first device for lodgement 243 of exceeding optical fibres, on which segments of optical fibre cables coming from said opening 23 of the optical apparatuses can be rolled-up.

The ends of said cables, being provided with suitable connectors, are inserted in said clamps 242.

To allow the connection of optical fibre cables not provided with a suitable connector, the connection side comprises a plurality of housings 244 able to movably receive a casing for an optical joint between the end of said optical fibre cable and one segment of fibre provided at one end with a connector insertable in at least one of said clamps.

The permutation side comprises a plurality of permutation matrices 251 each provided with a plurality of clamps 252, each able to receive at least one optical connector.

Such permutation matrixes are optically connected with the connection matrices displaced on the connection side of the rack. In particular, each clamp of the permutation matrix 252 is connected with a clamp 242 of the connection matrix 241. Preferably, the connection among the clamps of the two sides is operated in a way that the configuration of the matrices on the connection side is the same of the permutation side.

On the permutation side is therefore obtained the possibility to make connections amongst all the optical cables with the permutation device and connected with the connection matrixes of the connection side.

Moreover, the rack comprises a first passing hollow 26, preferably realized in correspondence with the top hinge of the rotatable rack, and a second passing hollow 27 preferably realized in correspondence with the bottom hinge of the rotatable rack.

Moreover, the permutation side comprises at least a second device for lodgement 243 of exceeding optical fibres, on which optical fibres cables can be rolled up.

Therefore, using segments or portions of optical fibre connection cables, having connectors at their respective ends fitting with said clamps, it is possible to optically connect with each other the optical apparatuses of which the entering and exiting optical fibre cables are coupled with the optical permuter on the connection side.

Moreover, by means of the passing hollows 26 and 27 it is possible to insert optical cables coming for instance from other optical permuters, exploiting in the meantime the devices for lodgement 252 to roll up the exceeding optical fibre segments.

Advantageously, two operation phases on the optical permutation device can be individuated according to the present invention.

A first phase of setting-up of the permutation device which comprises the connection phase, in which the optical cables of the optical apparatuses to be connected with each other, are connected with the rack in the connection side, through the insertion of optical connectors in the above clamps and/or through the realization of optical joints. In such a phase of setting-up, the rack is preferably rotated towards the abovementioned "opening" direction, in a way that the operator can easily make the established connections.

Once the connection phase is completed, the rack can be rotated towards the "closing" direction, in a way that the connections can not be accidentally changed.

In the closed position, the rack presents the permutation side in front of the operator, who can easily complete the established permutations by means of available segments of cable.

Further, in such a position it is anyway possible to insert optical fibre cables in the rack, coming from the outside of the permutation device through the hollows 26 and 27.

In some cases, it can be possible that the rack is fastened in a closed position by means for instance of a lock, establishing therefore two different ways to operate: in the former, wherein the operator is able either to carry out the setting-up or the permutation operation on the permutation device, and in the latter wherein the operator is able to carry out only one of the two operations.

Preferably, above each connection matrix a transponder device is provided able to collect all data relevant to the fibres connected to the matrix. The data of each single transponder can be transmitted to a central transponder of the rack, fixed within the shutter or outside it.

Said data can be available to the operator by means of a proper reader/writer of transponder or transmitted to a central record.

## Claims

1. Optical permutation device comprising a box structure consisting of a box element (21) and a rotatable shutter (22) being able to close said box element (21), said box structure having at least one opening (23) able to allow the passage of optical fibre cables incoming and exiting from optical apparatuses to be connected with each other according to a predetermined scheme and a separating rotatable rack (24), placed in-between the box element and the rotatable closing shutter, in which on a first side are placed connectors for connecting said optical fibre cables with permutation connectors and, on the second opposite side are placed said permutation connectors, arranged so as to optically connect said cables with each other according to a predetermined scheme,
wherein
said rack (24) comprises on the first side at least a connection matrix (241) provided with at least a clamp (242) arranged to receive at least an optical connector of said optical fibre cables, wherein
the connection side of the box structure comprises at least one first device for lodgement (243) of exceeding optical fibres, on which segments of optical fibre cables can be rolled-up, the optical fibre cables coming from said opening (23), the ends of said cables being provided with connectors inserted in said clamps (242), **characterized in that**
the rack (24) on the first side comprises a plurality of housings (244) adapted to movably receive a casing for an optical joint between the end of optical fibres not provided with a suitable connector and one segment of fibre provided at one end with a connector insertable in at least one of said clamps (242).

2. Optical permutation device according to claim 1, wherein said rack comprises at least one connection matrix (251) on the second side, provided with at least one clamp (252) able to receive at least one optical connector.

3. Optical permutation device according to the previous claims, wherein each clamp (252) of the permutation matrix is aligned with at least a clamp (242) of the connection matrix so that the permutation matrix is optically connected with the connection matrix.

4. Optical permutation device according to the previous claims, wherein the connection among the clamps of the two sides is operated in a way that the configuration of the connection matrices on the first side is the same of that of the second side.

5. Optical permutation device according to claim 1, wherein the rack comprises on the second side at least a further device for lodgement (252) of exceeding optical fibre, on which segments of optical fibre cables can be rolled-up.

6. Optical permutation device according to claim 1, wherein the rack comprises a first passing hollow (26) realized in correspondence with the top hinge of the rotatable rack, and a second passing hollow (27) realized in correspondence with the bottom hinge of the rotatable rack, said hollows being able to receive optical cables coming from other optical permuters.

7. Optical permutation device according to claim 1, wherein on each connection matrix a transponder device is provided, able to collect all data relevant to the fibres connected with the matrix.

8. Optical permutation device according to claim 7, wherein means are provided so that the data of each single transponder are transmitted to a central rack transponder, fixed within the shutter or outside it.

## Patentansprüche

1. Optischer Umsetzer, umfassend ein Gehäuse bestehend aus einem Gehäuseelement (21) und einer schwenkbaren Klappe (22), welche das Gehäuseelement (21) zu verschließen vermag, wobei das Gehäuse wenigstens eine Öffnung (23) aufweist, die den Durchgang von optischen Faserkabeln ermöglicht, welche in optische Geräte hinein und aus optischen Geräten heraus führen, die miteinander nach einem vorbestimmten Schema verbunden werden sollen, und einen trennenden schwenkbaren Rahmen (24), welcher zwischen dem Gehäuseelement und der schwenkbaren Verschlussklappe angeordnet ist, bei dem auf einer ersten Seite Anschlüsse angeordnet sind, um die optischen Faserkabel mit Umsetzeranschlüssen zu verbinden, wobei die Umsetzeranschlüsse auf der gegenüberliegenden zweiten Seite angeordnet und derart angebracht sind, dass die Kabel miteinander nach einem vorbestimmten Schema optisch verbunden sind, wobei der Rahmen (24) auf der ersten Seite wenigstens eine Verbindungsmatrix (241) umfasst, welche mit wenigstens einer Klemme (242) versehen ist, welche angebracht ist, um wenigstens einen optischen Anschluss der Faserkabel aufzunehmen, wobei die Verbindungsseite des Gehäuses wenigstens eine erste Vorrichtung zur Verstauung (243) von überbemessenen optischen Fasern umfasst, an welcher Segmente optischer Faserkabel aufgewickelt werden können, wobei die optischen Faserkabel von der Öffnung (23) kommen und wobei die Enden der Kabel mit Anschlüssen versehen sind, welche in die Klemmen (242) eingebracht sind, **dadurch gekennzeichnet, dass**
der Rahmen (24) auf der ersten Seite eine Vielzahl von Aufnehmern (244) umfasst, welche geeignet sind, um in beweglicher Weise eine Ummantelung für eine optische Verbindung zwischen dem Ende von optischen Fasern, welche nicht mit einem passenden Anschluss versehen sind, und einem Fasersegment, welches an einem Ende mit einem Anschluss versehen ist, welcher in wenigstens eine der Klemmen (242) eingebracht werden kann, aufzunehmen.

2. Optischer Umsetzer nach Anspruch 1, wobei der Rahmen auf der zweiten Seite wenigstens eine Umsetzermatrix (251) umfasst, welche mit wenigstens einer Klemme (252) versehen ist, die geeignet ist, wenigstens einen optischen Anschluss aufzunehmen.

3. Optischer Umsetzer nach den vorhergehenden Ansprüchen, wobei jede Klemme (252) der Umsetzermatrix bezüglich wenigstens einer Klemme (242) der Verbindungsmatrix ausgerichtet ist, so dass die Umsetzermatrix mit der Verbindungsmatrix optisch verbunden ist.

4. Optischer Umsetzer nach den vorhergehenden Ansprüchen, wobei die Verbindung zwischen den Klemmen auf den beiden Seiten in der Weise durchgeführt wird, dass die Belegung der Verbindungsmatrizen auf der ersten Seite dieselbe ist wie jene auf der zweiten Seite.

5. Optischer Umsetzer nach Anspruch 1, wobei der Rahmen auf der zweiten Seite wenigstens eine weitere Vorrichtung zur Verstauung (252) von überbemessener optischer Faser umfasst, an welcher Abschnitte optischer Faserkabel aufgerollt werden können.

6. Optischer Umsetzer nach Anspruch 1, wobei der Rahmen eine erste Durchgangsaussparung (26), welche in Übereinstimmung mit dem oberen Scharnier des schwenkbaren Rahmens verwirklicht ist, und eine zweite Durchgangsaussparung (27), welche in Übereinstimmung mit dem unteren Scharnier des schwenkbaren Rahmens verwirklicht ist, umfasst, wobei die Aussparungen geeignet sind, optische Kabel aufzunehmen, welche von anderen optischen Umsetzern kommen.

7. Optischer Umsetzer nach Anspruch 1, wobei an jeder Verbindungsmatrix ein Transpondergerät vorgesehen ist, welches geeignet ist, alle relevanten Daten für die mit der Matrix verbundenen Fasern zu erfassen.

8. Optischer Umsetzer nach Anspruch 7, wobei Mittel vorgesehen sind, so dass die Daten jedes einzelnen Transponders an einen zentralen Rahmen-Transponder übertragen werden, welcher innerhalb der Klappe oder außerhalb dieser befestigt ist.

## Revendications

1. Dispositif de permutation optique comprenant une structure de boîtier consistant en un élément de boîtier (21) et un volet rotatif (22) permettant de fermer ledit élément de boîtier (21), ladite structure de boîtier ayant au moins une ouverture (23) permettant le passage de câbles à fibres optiques entrant et sortant d'appareils optiques devant être mutuellement connectés selon un schéma prédéterminé, et un bâti rotatif de séparation (24), placé entre l'élément de boîtier et le volet de fermeture rotatif, dans lequel, sur un premier côté, sont placés des connecteurs pour connexion desdits câbles à fibres optiques avec des connecteurs de permutation et, sur le second côté opposé, sont placés lesdits connecteurs de permutation, agencés de sorte à connecter optiquement lesdits câbles les uns aux autres selon un schéma prédéterminé, dans lequel
ledit bâti (24) comprend sur le premier côté au moins une matrice de connexion (241) dotée d'au moins un élément de fixation (242) agencé pour recevoir au moins un connecteur optique desdits câbles à fibres optiques, dans lequel
le côté de connexion de la structure de boîtier comprend au moins un premier dispositif pour le logement (243) des fibres optiques en excès, sur lequel des segments de câbles à fibres optiques peuvent être enroulés, les câbles à fibres optiques provenant de ladite ouverture (23), les extrémités desdits câbles étant dotées de connecteurs insérés dans lesdits éléments de fixation (242), **caractérisé en ce que**
le bâti (24) sur le premier côté comprend une pluralité de logements (244) adaptés pour recevoir de façon mobile un logement pour un joint optique entre l'extrémité de fibres optiques non dotée d'un connecteur approprié et un segment de fibre doté à une extrémité d'un connecteur insérable dans au moins un desdits éléments de fixation (242).

2. Dispositif de permutation optique selon la revendication 1, dans lequel ledit bâti comprend au moins une matrice de permutation (251) sur le second côté, dotée d'au moins un élément de fixation (252) apte à recevoir au moins un connecteur optique.

3. Dispositif de permutation optique selon les revendications précédentes, dans lequel chaque élément de fixation (252) de la matrice de permutation est aligné sur au moins un élément de fixation (242) de la matrice de connexion, de telle sorte que la matrice de permutation soit optiquement connectée à la matrice de connexion.

4. Dispositif de permutation optique selon les revendications précédentes, dans lequel la connexion entre les éléments de fixation des deux côtés est assurée de telle manière que la configuration des matrices de connexion sur le premier côté soit la même que celle du second côté.

5. Dispositif de permutation optique selon la revendication 1, dans lequel le bâti comprend sur le second côté au moins un autre dispositif pour le logement (252) de la fibre optique en excès, sur lequel des segments de câbles de fibres optiques peuvent être enroulés.

6. Dispositif de permutation optique selon la revendication 1, dans lequel le bâti comprend un premier creux de passage (26) réalisé en correspondance avec l'articulation supérieure du bâti rotatif, et un second creux de passage (27) réalisé en correspondance avec l'articulation inférieure du bâti rotatif, lesdits creux pouvant recevoir les câbles optiques provenant d'autres permuteurs optiques.

7. Dispositif de permutation optique selon la revendication 1, dans lequel sur chaque matrice de connexion est prévu un dispositif transpondeur apte à collecter l'ensemble des données relatives aux fibres connectées à la matrice.

8. Dispositif de permutation optique selon la revendication 7, dans lequel des moyens sont prévus pour permettre la transmission des données de chaque unité de transpondeur à un transpondeur de bâti central, fixé à l'intérieur du volet ou à l'extérieur de celui-ci.
